## Europäisches Patentamt

## European Patent Office

## Office européen des brevets

(19)

(11) Veröffentlichungsnummer: **0 087 016**
**B1**

(12) **EUROPÄISCHE PATENTSCHRIFT**

(45) Veröffentlichungstag der Patentschrift:
**07.10.87**

(51) Int. Cl.⁴: **B 65 D 47/04,** G 01 F 19/00

(21) Anmeldenummer: **83100946.9**

(22) Anmeldetag: **02.02.83**

(54) **Flasche mit Dosiervorrichtung.**

(30) Priorität: **06.02.82 DE 3204118**

(43) Veröffentlichungstag der Anmeldung:
**31.08.83 Patentblatt 83/35**

(45) Bekanntmachung des Hinweises auf die Patenterteilung:
**07.10.87 Patentblatt 87/41**

(84) Benannte Vertragsstaaten:
**AT BE CH DE FR GB IT LI NL SE**

(56) Entgegenhaltungen:
**FR - A - 1 526 291**
**US - A - 3 094 250**

(73) Patentinhaber: **Wella Aktiengesellschaft, Berliner Allee 65, D-6100 Darmstadt (DE)**

(72) Erfinder: **Steigerwald, Franz, Goethestrasse 8, D-6103 Griesheim (DE)**
Erfinder: **Zulauf, Karlheinz, Darmstädter Strasse 24, D-6128 Höchst-Hassenroth (DE)**

## Beschreibung

Die Erfindung betrifft eine Flasche mit einer Dosiervorrichtung gemäss dem Oberbegriff des Anspruchs 1.

Eine solche Flasche ist z.B. aus der US-A 3 094 250 bekannt, wobei mittels eines Schwerkraftventiles ein Rückfluss einer dosierten Flüssigkeit aus einem Dosierbehälter in ein Vorratsgefäss verhindert wird, was den Nachteil aufweist, dass beim Kippen der Flasche zwecks Entleerung der dosierten Flüssigkeit aus dem Dosierbehälter eine unkontrollierbare Flüssigkeitsmenge aus einem mit dem Ventil verbundenen Steigrohr nachfliessen kann, was dadurch bedingt ist, dass das Schwerkraftventil durch das Kippen in eine instabile Lage kommt und sich ganz oder teilweise öffnet. Ein weiterer Nachteil ist darin zu sehen, dass durch Substanzanlagerungen innerhalb des Schwerkraftventils dieses ganz oder teilweise ausser Funktion gesetzt werden kann. Der Dosierbehälter ist am oberen Ende mit einem Drehverschlussdeckel versehen, der zwei diametral gegenüberliegende Öffnungen aufweist, wovon eine zum Entleeren und die andere zum Belüften dient. Eine Restmenge der Flüssigkeit im Bereich der Öffnung führt zu einer aussenseitigen Benetzung der Flasche. Beim Transport kann durch ungewollte Schüttel- oder Knautschbewegungen unkontrolliert Flüssigkeit über das Steigrohr in den Dosierraum gelangen. In einer weiteren Ausführung soll dies ein Ventilstopfen verhindern, der jedoch vor Gebrauch der Flasche umständlich zu entfernen ist.

Es ist Aufgabe der vorliegenden Erfindung, eine besonders benützerfreundliche Ausführungsform anzugeben, bei der die vorstehend genannten Nachteile vermieden werden.

Die Aufgabe wird bei einer Flasche mit Dosiervorrichtung der eingangs genannten Art gemäss der Erfindung durch die im Kennzeichen des Patentanspruches angegebenen technischen Merkmale gelöst.

Weitere Fortbildungen und Ausgestaltungen der Erfindung sind in den Unteransprüchen gekennzeichnet und werden nachstehend in Verbindung mit den Ausführungsbeispiele darstellenden, teilweise schematisch vereinfachten Figuren beschrieben. In diesen sind einander entsprechende Teile mit gleichen Bezugszeichen versehen, und es sind alle zum Verständnis der Erfindung nicht notwendigen Einzelheiten fortgelassen worden.

Es zeigt:

Fig. 1 eine gemäss der Erfindung ausgeführte Flasche mit Dosiervorrichtung bei geschlossenem Ventil im Längsschnitt;

Fig. 2 die in Fig. 1 dargestellte Flasche mit Dosiervorrichtung bei geöffnetem Ventil im Längsschnitt;

Fig. 3 die in Fig. 1 gezeigte Dosiervorrichtung, rechts bei geöffnetem, links bei geschlossenem Ventil im Längsschnitt;

Fig. 4 den in den Fig. 1 und 2 dargestellten Dosierbehälter mit aufgeklapptem Deckel im Längsschnitt;

Fig. 5 eine Draufsicht auf den in Fig. 4 dargestellten Dosierbehälter und auf die Innenseite des Deckels;

Fig. 6 eine Draufsicht auf die Aussenseite des in den Fig. 4 und 5 dargestellten Deckels;

Fig. 7 eine Seitenansicht der auf die Flasche aufsetzbaren Dosiervorrichtung;

Fig. 8 als konstruktives Detail den Innenteil der in Fig. 1 und 2 dargestellten Dosiervorrichtung;

Fig. 9 den in Fig. 8 dargestellten Innenteil, von unten gesehen;

Fig. 10 den in Fig. 8 dargestellten Innenteil, von oben gesehen.

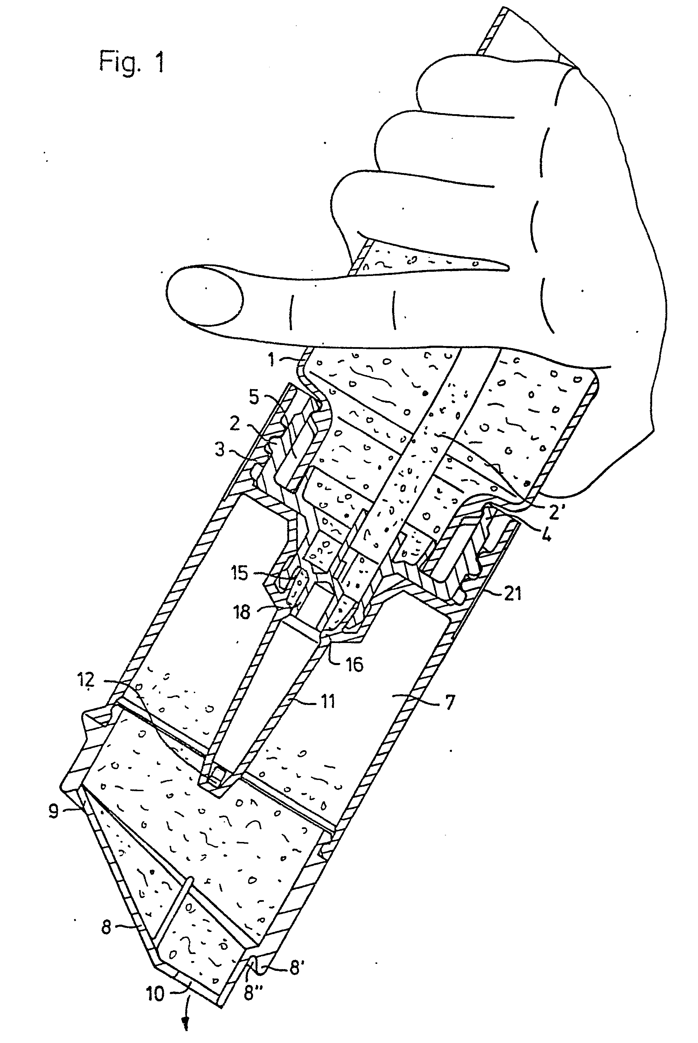

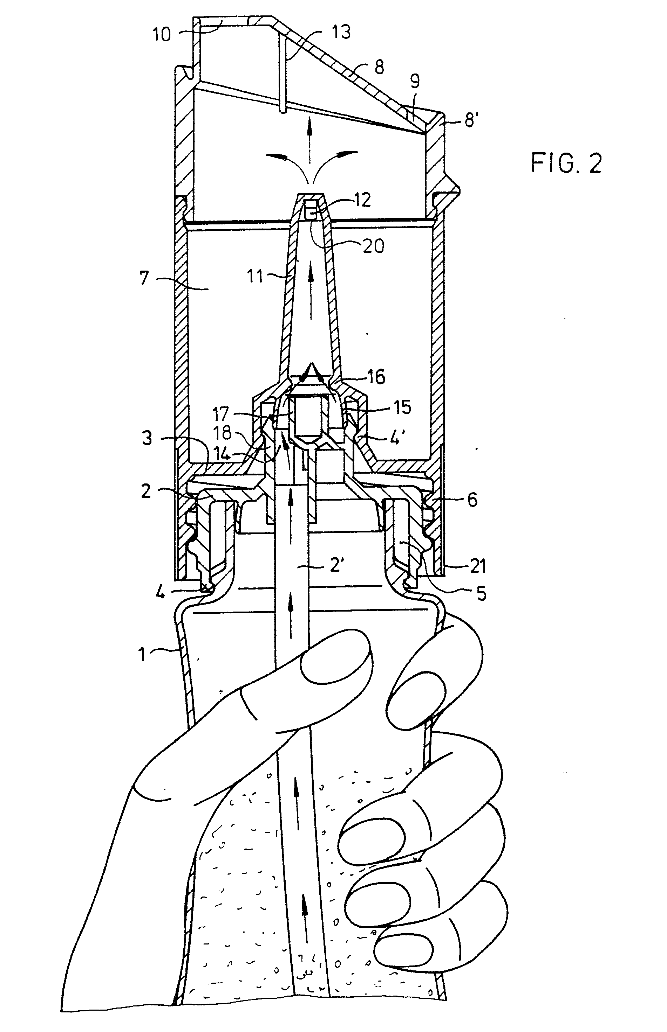

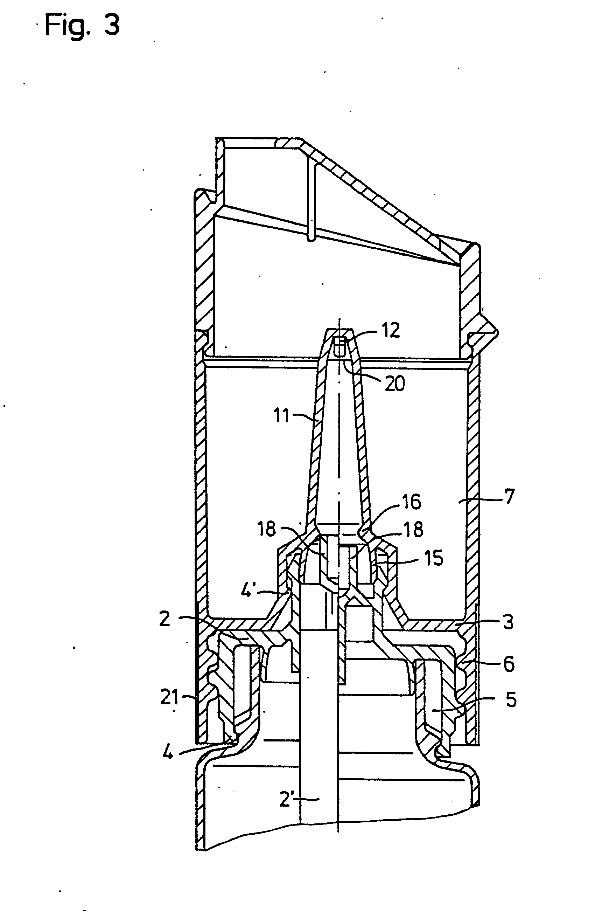

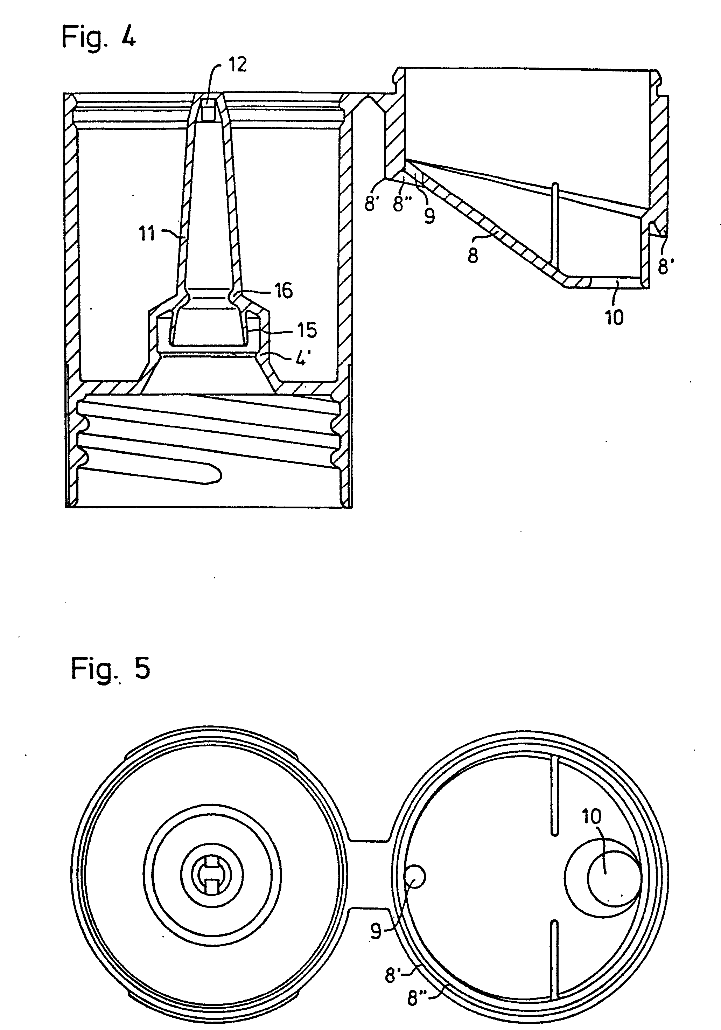

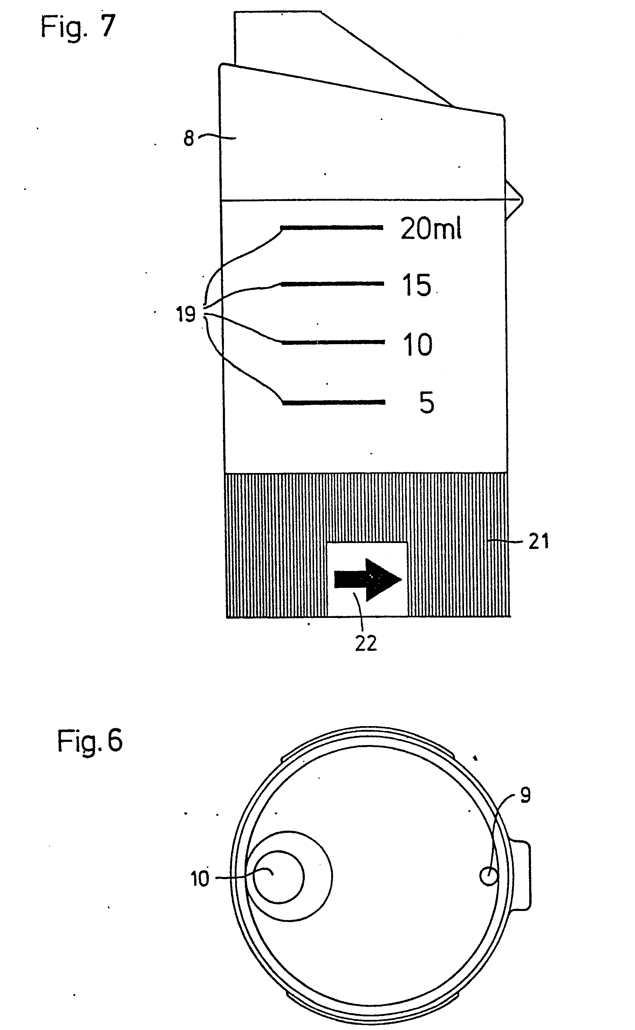

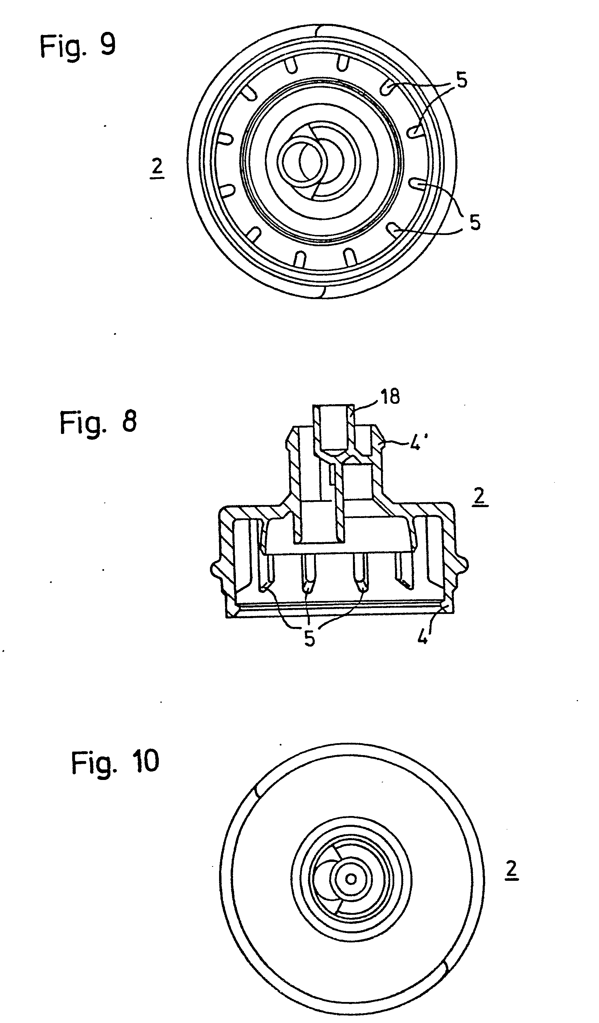

Die Figuren 1 und 2 zeigen die Handhabung der Erfindung; während die Figuren 3 bis 10 die konstruktive Ausbildung der einzelnen Bauteile deutlich erkennen lassen.

Auf der zur Verpackung der zur Dosierung der Flüssigkeit dienenden Flasche 1 aus knautschfähigem Material ist eine an deren Hals angepasste Dosiervorrichtung aufgesetzt. Letztere dient gleichzeitig als Verschluss, kann Bestandteil der Verpackung sein und besteht im wesentlichen aus einem Innenteil 2 mit einem exzentrisch eingesetzten, bis auf den Behälterboden reichenden Steigrohr 2' und einem Aussenteil 3 aus transluzentem bzw. transparentem Kunststoff. Das Innenteil 2 ist aus einem gedeckt eingefärbten Kunststoff hergestellt und ist über eine erste Schnappverbindung 4 fest mit dem Flaschenhals verbunden. Peripher am Innendurchmesser des Innenteils 2 angeordnete Rippen 5 stehen mit entsprechenden Nocken am Flaschenhals im Eingriff und sichern damit das Innenteil 2 gegen Verdrehen. Das Aussenteil 3 überdeckt das Innenteil 2 und ist über ein Gewinde 6 und über eine zweite Schnappverbindung 4' mit diesem drehbar verbunden.

Die dem Gewindebereich gegenüberliegende grössere Öffnung des Dosieraussenteiles wird durch einen am Aussenteil 3 angeformten, als Klappdeckel ausgebildeten Deckel 8 verschlossen.

Die Aussenfläche des Deckels 8 verläuft schräg zur Längsachse des Dosierbehälters 7 und die beiden einander diametral gegenüberliegenden Öffnungen 9 und 10 sind derart angeordnet, dass die grössere, zum Ausgiessen der Flüssigkeit vorgesehene Öffnung 10 in der von der Flasche 1 am weitesten entfernten Zone des Deckels 8, die andere, zum Ansaugen der Luft vorgesehene kleinere Öffnung 9 in der zur Flasche 1 am nächsten liegenden Zone sich befindet. Der Deckel 8 trägt an seiner Aussenseite einen in axialer Richtung nach aussen vorragenden Ringwulst 8', der die beiden im Deckel angeordneten Öffnungen 9 und 10 umgibt. Die kleinere Öffnung 9 befindet sich im tiefsten Bereich der durch den Ringwulst 8' und der von ihm aussen begrenzten Rinne 8''.

Innerhalb des Dosierraumes ist eine leicht konisch verlaufende Dosierröhre 11 zentrisch angeordnet, an deren oberen Ende sich zwei gegenüberliegende Austrittsöffnungen 12 befinden. Diese sind gegenüber der zum Ausgiessen der hinsichtlich ihrer Menge dosierten Flüssigkeit dienenden Öffnung 10 um 90° versetzt angeordnet. Durch diese konstruktive Massnahme wird verhindert, dass beim Dosiervorgang einer der am oberen Ende der Dosierröhre austretenden Flüssigkeitsstrahlen auf die Öffnung 10 trifft und damit Flüssigkeit in unerwünschter Weise nach aussen gelangt. Zusätzlich hierzu sind noch an der Innenseite des Deckels 8, parallel zu den Austrittsöffnungen 12 zwei seitliche Prallstege 13 angeordnet, die den sich durch den Aufprall der Strahlen an der Kopfplatte bildenden Flüssigkeitsfilm in Richtung zur Öffnung 10 begrenzen. Die Abdichtung des Aussenteils 3 gegenüber dem Innenteil 2 geschieht in geschlossenem Zustand sowohl durch eine in die obere Öffnung 14 des Innenteils ragende Dichtlippe 15 und ausserdem durch einen an der Innenbohrung des Dosierrohres 11 befindlichen Dichtwulst 16, der an einer entsprechenden Dichthülse 17 des Innenteils 2 dicht anliegt. In diesem Zustand kann keine Flüssigkeit aus der Flasche 1 in die Dosiervorrichtung gelangen.

Soll nun Flüssigkeit dosiert entnommen werden, so wird das Aussenteil 3 wie bei einem normalen Schraubverschluss gedreht. Durch diese Drehung wird das Aussenteil 3 über das Gewinde 6 gegenüber dem Innenteil 2 axial nach oben verschoben. Die Axialbewegung wird durch entsprechende Anschlagwülste des Innenteils 2 und des Aussenteils 3 begrenzt. In dieser Endstellung ist nur noch eines der beiden Dichtelemente, und zwar nur noch die Dichtlippe 15 am Rohrstutzen 18 wirksam, die verhindert, dass Flüssigkeit zwischen Aussenteil 3 und Innenteil 2 gelangt. Der im unteren Bereich des Dosierrohres 11 angebrachte Dichtwulst 16 befindet sich oberhalb der Dichthülse 17 und es ist somit die Verbindung zwischen Flasche 1 und Dosierbehälter 7 geöffnet.

Bedingt durch die axiale Verschiebung zwischen Aussenteil 3 und Innenteil 2 wird der untere Bereich des eingefärbten, vorher verdeckten Innenteils 2 in der Höhe ca. 2 mm sichtbar und signalisiert dadurch optisch die Offenstellung des Dosierers.

Wird nun, z. B. durch Knautschen der Flasche 1, Überdruck erzeugt, so steigt die Flüssigkeit im Steigrohr 2' hoch und gelangt über das Dosiererinnenteil in das Dosierrohr 11 des Aussenteiles 3 und tritt hier über die beiden Öffnungen 12 in den Dosierbehälter 7 ein. Die Dosiermenge kann nun über eine Skala 19 bestimmt werden. Das maximal mögliche Flüssigkeitsniveau ist durch die Unterkante 20 der beiden Austrittsöffnungen 12 des Dosierrohres 11 vorgegeben. Flüssigkeit, die im Dosierbehälter oberhalb dieser Öffnungen steht, wird durch den nach der Knautschbewegung im Behälter entstehenden Unterdruck in diesen zurückgesaugt.

Das oberhalb dieses maximal möglichen Füllspiegels liegende Kopfraumvolumen des Dosierbehälters muss etwas grösser sein als die durch eine Knautschbewegung aus dem Behälter verdrängbare Flüssigkeitsmenge. Dadurch ist gewährleistet, dass durch eine eventuelle Überdosierung keine Flüssigkeit aus der Ausgiessöffnung 10 der Dosiervorrichtung austritt.

Ist der Dosiervorgang abgeschlossen, wird der Behälter bzw. die Flasche durch Drehen des Aussenteiles 3 wieder verschlossen und die Flüssigkeit aus dem Dosierbehälter 7 durch Schütteln oder Ausgiessen entnommen. Dieses nachträgliche Verschliessen hat den Vorteil, dass während der Entnahme aus dem Dosierer keine Flüssigkeit unkontrolliert aus dem Behälter nachfliessen kann.

Zur Verbesserung der Griffigkeit ist der untere, dem Behälter zugewandte Bereich des Aussenteils 3 als Griffstück 21 mit einer über den Umfang verteilten Rillung ausgebildet. Die Höhe der Rillung entspricht etwa der Höhe des Innenteils 1.

Die Rillung ist jedoch entlang des Umfanges dreimal unterbrochen und es sind zur Verdeutlichung der Richtung der Öffnungsbewegung zusätzlich Markierungen in Form von erhabenen Pfeilen 22 angebracht.

Das vorstehend beschriebene Ausführungsbeispiel zeichnet sich insbesondere durch nachstehende Vorteile aus: –

1. Es ist benutzerfreundlich durch einfache Handhabung und grosse Betriebssicherheit.

2. Es ist benutzerfreundlich, weil die nach Beendigung des Dosiervorganges im Bereich der Ausgiessöffnung 10 vorhandenen Restflüssigkeit nicht auf die Aussenseite der Dosiervorrichtung bzw. die Hand des Benützers gelangt, sondern in das Innere zurückgeleitet wird; infolgedessen ist die Dosiervorrichtung auch für aggressive oder stark färbende Flüssigkeiten, beispielsweise konzentrierte Haarfarbe gut verwendbar.

3. Die Gefahr eines Unbrauchbarwerdens durch dauerhaftes Verkleben der Verschlussvorrichtung ist mit Sicherheit vermieden, denn zwischen Vorratsbehälter und Dosierraum befindet sich eine Verschlussvorrichtung mit nur kleiner Berührungsfläche; daher ist zum Öffnen auch bei etwaiger Verklebung nur ein verhältnismässig geringer Kraftaufwand erforderlich.

4. Durch die spezielle Art der Öffnungs- und Schliessbewegung wird eine Selbstreinigung der Dichtungsflächen bei der Öffnungs- und Schliessbewegung erzielt.

5. Durch einfache, aber wirkungsvolle konstruktive Massnahmen ist eine sehr genaue Dosierung gewährleistet.

**Patentansprüche**

1. Flasche (1) aus elastischem Material mit einer Dosiervorrichtung, die einen kalibrierten Dosierbehälter (7), einen Kanal für die Zuführung der zu dosierenden Flüssigkeit vom Innern der Flasche (1) zu einem in der Dosiervorrichtung angeordneten Ventil mit einem Ventilsitz (16) und einem Ventilkörper (17) sowie einen den Dosierbehälter (7) auf dem von der Flasche (1) abgewendeten Ende verschliessenden Deckel mit zwei diametral gegenüberliegenden Öffnungen (9, 10) aufweist, die zur Abgabe von vorbestimmten Mengen der in der Flasche (1) enthaltenen Flüssigkeit bestimmt ist, bei der die als Vorratsgefäss dienende Flasche (1) mit dem Dosierbehälter (7) verbunden ist und bei der ein Innenteil (2) vorgesehen ist, das einen Rückfluss der dosierten Flüssigkeit aus dem Dosierbehälter (7) in das Vorratsgefäss verhindert, wobei auf die Mündung der zusammendrückbaren, die abzugebende Flüssigkeit enthaltenden Flasche (1) der Innenteil (2) der Dosiervorrichtung aufsetzbar ist, dadurch gekennzeichnet, dass der Innenteil (2) mittels einer Schnappvorrichtung (4) auf die Mündung aufsetzbar ist,

dass am Flaschenhals aussen Nocken vorgesehen sind und der auf die Flasche (1) aufgesetzte Innenteil (2) nach innen vorragende Rippen (5) aufweist, die derart in Bezug auf diese Nocken dimensioniert sind, dass ein Verdrehen des Innenteils (2) relativ zur Flasche (1) verhindert ist,

dass der Ventilsitz (16) oder der Ventilkörper (17) durch Verdrehen eines Griffstückes (21) wahlweise in axialer Richtung zum bzw. vom anderen zum Zwecke der Öffnung bzw. Schliessung des Ventils (16, 17) bewegbar ist,

dass ein Deckel (8) mit zwei diametral gegenüberliegenden Öffnungen (9, 10), deren eine Öffnung (10) – gemessen in Längsrichtung der Flasche (1) – von dieser weiter entfernt ist als die andere Öffnung (9), den Dosierbehälter (7) auf dem von der Flasche (1) abgewendeten Ende verschliesst

und dass die Mündung des zur Zuführung der Flüssigkeit vom Ventil (16, 17) in den Dosierbehälter (7) dienenden Dosierrohres (11) – bei senkrecht gehaltener Flasche – höher liegt als die Markierung der höchsten üblicherweise abzugebenen Flüssigkeitsmenge.

2. Flasche mit Dosiervorrichtung nach Anspruch 1, dadurch gekennzeichnet, dass einer der beiden die Ventilöffnung begrenzenden Bauteile, nämlich entweder der Ventilsitz (16) oder der Ventilkörper (17), vorzugsweise ersterer, mit dem Griffstück (21) im Material verbunden ist.

3. Flasche mit Dosiervorrichtung nach Anspruch 1, dadurch gekennzeichnet, dass der auf die Mündung der Flasche mittels Schnappverbindung aufsetzbare Innenteil (2) kappenförmig ausgebildet ist und aussen ein Gewinde (6) trägt, auf welchem der den Dosierbehälter (7) enthaltende, ein passendes Innengewinde aufweisende Aussenteil (3) sitzt, der mit einem der beiden die Ventilöffnung begrenzenden Bauteile, nämlich entweder dem Ventilsitz (16) oder dem Ventilkörper (17), vorzugsweise ersterem, im Material verbunden ist.

4. Flasche mit Dosiervorrichtung nach Anspruch 1, dadurch gekennzeichnet, dass das von der Flasche (1) abgewendete Ende des Dosierbehälters (7) von einem zweckmässigerweise als am Aussenteil (3) angeformten Klappdeckel ausgebildeten Deckel (8) verschlossen ist, der zwei diametral gegenüberliegende Öffnungen (9, 10) hat.

5. Flasche mit Dosiervorrichtung nach Anspruch 4, dadurch gekennzeichnet, dass die Aussenfläche des Deckels (8) schräg zur Längsachse des Dosierbehälters (7) verläuft und die beiden darin befindlichen Öffnungen (9, 10) derart angeordnet sind, dass die grössere, zum Ausgiessen der Flüssigkeit vorgesehene Öffnung (10) in der von der Flasche (1) am weitesten entfernten Zone des Deckels (8), hingegen die andere, zum Ansaugen der Luft vorgesehene kleinere Öffnung (9) in der zur Flasche (1) am nächsten liegenden Zone sich befindet.

6. Flasche mit Dosiervorrichtung nach Anspruch 1, dadurch gekennzeichnet, dass der Dosierbehälter (7) eine transparente Aussenwand mit einer an sich bekannten von aussen ablesbaren Markierung für die üblicherweise abzugebenden dosierten Mengen hat.

7. Flasche mit Dosiervorrichtung nach Anspruch 1, dadurch gekennzeichnet, dass die Austrittsöffnung des vorzugsweise im Dosierbehälter (7) zentrisch angeordneten Dosierrohres (11) seitlich angeordnet ist und entgegen der zum Ausgiessen der Flüssigkeit vorgesehenen Öffnung (10) um 90° versetzt angeordnet ist.

8. Flasche mit Dosiervorrichtung nach Anspruch 7, dadurch gekennzeichnet, dass das Dosierrohr (11) zwei einander diametral gegenüberliegende Austrittsöffnungen (12) hat, die gegenüber der zum Ausgiessen der Flüssigkeit vorgesehenen Öffnung (10) um 90° versetzt angeordnet sind.

9. Flasche mit Dosiervorrichtung nach Anspruch 1, dadurch gekennzeichnet, dass das Dosierrohr (11) im Material mit der Aussenwand des Dosierbehälters (7) verbunden ist.

10. Flasche mit Dosiervorrichtung nach Anspruch 1, dadurch gekennzeichnet, dass der Deckel (8) an seiner Innenseite wenigstens einen vorzugsweise zwei nach innen vorragende Prallstege (13) trägt, die derart angeordnet sind, dass sie den durch Aufprall der Flüssigkeitsstrahlen an der Innenseite des Deckels (8) sich bildenden Flüssigkeitsfilm in Richtung zu der zum Ausgiessen vorgesehenen Öffnung (10) begrenzen.

11. Flasche mit Dosiervorrichtung nach Anspruch 5, dadurch gekennzeichnet, dass der Deckel (8) an seiner Aussenseite einen in axialer Richtung nach aussen vorragenden Ringwulst (8') trägt, der die beiden im Deckel angeordneten Öffnungen (9, 10) umgibt.

12. Flasche mit Dosiervorrichtung nach Anspruch 11, dadurch gekennzeichnet, dass die kleine Öffnung (9) sich im tiefsten Bereich der durch den Ringwulst (8') gebildeten und von ihm aussen begrenzten Rinne (8'') befindet.

13. Flasche mit Dosiervorrichtung nach Anspruch 1, dadurch gekennzeichnet, dass das mit dem Griffstück (21), vorzugsweise einstückig im Material verbunden und vorzugsweise konisch ausgebildete Dosierrohr (11) an seinem dem Ventil zugewendeten Ende einen nach innen vorragenden Dichtwulst (16) hat, der bei geschlossenem Ventil an einer mit dem Innenteil (2) fest verbundenen Dichthülse (17) dicht anliegt und beim Öffnen des Ventils relativ zur Dichthülse schraubenförmig bewegt wird.

14. Flasche mit Dosiervorrichtung nach Anspruch 14, dadurch gekennzeichnet, dass an der der Flasche (1) zugewendeten Seite des Dichtwulstes (16) eine vorzugsweise als Kalotte ausgebildete Dichtlippe (15) vorgesehen ist, die an einem mit dem Innenteil (2) fest verbundenem konzentrisch zur Dichthülse angeordnetem Rohrstutzen (18) anliegt und deren Länge derart bemessen ist, dass sie auch bei voll geöffnetem Ventil an diesem Rohrstutzen (18) anliegt.

15. Flasche mit Dosiervorrichtung nach Anspruch 1, dadurch gekennzeichnet, dass der der Flasche (1) zugewendete, bei geschlossener Ventilstellung durch das Griffstück (21) des Aussenteils (3) verdeckte, jedoch bei geöffneter Ventilstellung sichtbare Bereich des Innenteils (2) eingefärbt ist.

16. Flasche mit Dosiervorrichtung nach Anspruch 1, dadurch gekennzeichnet, dass der der Flasche (1) zugewendete, als Griffstück (21) mit strukturierter Oberfläche versehene Bereich des Aussenteils (3) eine in Richtung zum Öffnen weisende, vorzugsweise erhabene Markierung durch Pfeile (22) trägt.

17. Flasche mit Dosiervorrichtung nach Anspruch 1, gekennzeichnet durch vorragende Wülste, welche die Verdrehung des Aussenteils (3) relativ zum Innenteil (2) begrenzen.

**Claims**

1. A bottle (1) made of resilient material and a metering device for delivering pre-determined quantities of fluid contained in the bottle (1), the metering device having a calibrated metering container (7), a channel for delivering fluid to be metered from inside the bottle (1) to a valve disposed in the metering device, the valve having a valve seat (16) and a valve body (17), and a cover for sealing the metering container (7) on an end thereof remote from the bottle (1), the cover having two diametrically opposed openings (9, 10), wherein the bottle (1) acts as a storage vessel and is connected to the metering container, and an inner part is provided for preventing backflow of the metered fluid from the metering container, the inner part (2) of the metering device being detachable from the mouth of the compressible bottle (1) containing the fluid to be dispensed, characterised in that external bosses are provided on the bottle neck, and the inner part (2) detachable from the bottle (1) has inwardly projecting ribs (5) dimensioned in respect of the said bosses such that the inner part (2) is prevented from rotating with respect to the bottle (1), that the valve seat (16) or the valve body (17) is selectively axially displaceable towards or away from one another for opening or closing the valve (16, 17) by rotation of a gripping member (21), that a cover (8) having two diametrically opposed openings (9, 10), one said opening (10) of the bottle (1) being further away from the bottle in the longitudinal direction thereof than the other opening (9), the cover sealing the metering container (7) on the end thereof remote from the bottle (1), and that the mouth of the metering tube (11) used to supply the fluid from the valve (16, 17) to the metering container – in the case of a bottle held vertically – is disposed higher than the marking for the highest fluid quantity usually delivered.

2. A bottle and metering device according to claim 1, characterised in that one of the two components limiting the valve opening, i.e. either the valve seat (16) or the valve body (17) and preferably the former, is integrally joined to the gripping member (21).

3. A bottle and metering device according to claim 1, characterised in that the inner part (2) is attachable to the mouth of the bottle by means of a snap connection and is designed in the shape of a cap having an external thread (6), the outer part (3) having a fitting inner thread and containing the metering container (7) sitting thereon and being integrally joined to one of the two components limiting the valve opening, i.e. the valve seat (16) or the valve body (17), preferably the former.

4. A bottle and metering device according to claim 1, characterised in that the end of the metering container (7) remote from the bottle (1) is sealed by a cover designed functionally as a flap lid integrally formed on the outer part (3), the cover having two diametrically opposed openings (9, 10).

5. A bottle and metering device according to claim 4, characterised in that the outer surface of the cover (8) extends obliquely to the longitudinal axis of the metering container (7), and both openings (9, 10) located therein are arranged such that the larger opening (10) provided for pouring the fluid is situated in the region furthest away from the bottle (1), whereas the other, smaller opening (9) provided for sucking in air is situated in the zone nearest the bottle (1).

6. A bottle and metering device according to claim 1, characterised in that the metering container (7) has a marked transparent outer wall, the markings being readable from the outside and known per se as the metered quantities normally dispensed.

7. A bottle and metering device according to claim 1, characterised in that the outlet opening of the metering tube (11), preferably arranged centrally in the metering container, is disposed laterally and offset at 90° with respect to the opening (10) provided for pouring the liquid.

9. A bottle and metering device according to claim 1, characterised in that the metering tube (11) is connected to the outer wall of the metering container (7).

10. A bottle and metering device according to claim 1, characterised in that the interior of the lid (8) supports at least one, preferably two, inwardly projecting impact webs (13) disposed such that the formation of fluid film in the direction of the opening (10) provided for pouring is limited as a result of the impact of the jets of fluid on the interior of the lid (8).

11. A bottle and metering device according to claim 5, characterised in that the exterior of the lid (8) supports annular beading (8') surrounding the openings (9, 10) disposed in the lid and extending outwardly in an axial direction.

12. A bottle and metering device according to claim 11, characterised in that the smaller opening (9) is located in the deepest region of a groove (8'') formed by the annular beading (8') and limited thereby on the outside.

13. A bottle and metering device according to claim 1, characterised in that the metering tube (11) has inwardly projecting sealing beading (16) on the end thereof facing the valve, the beading resting tightly on a sealing sleeve (17) connected to the inner part (2) when the valve is closed and being moved relative to the sealing sleeve in the manner of a screw when the valve is opened, the metering tube (11) being joined integrally, preferably in one piece, to the gripping member (21) and being preferably designed conically.

14. A bottle and metering device according to claim 14, characterised in that on the side of the sealing beading (16) facing the bottle (1) a sealing lip (15) designed as a calotte is preferably provided, the lip resting on a tube support (18) connected rigidly to the inner part (2) concentrically to the sealing sleeve and the length of which is dimensioned such that the lip also rests on this tube support (18) when the valve is fully open.

15. A bottle and metering device according to claim 1, characterised in that the area of the inner part (2) adjacent the bottle (1) is coloured, the said area being covered by the gripping member (21) of the outer part (3) in the closed valve position but is however visible when the valve is open.

16. A bottle and metering device according to claim 1, characterised in that the region of the outer part (3) adjacent the bottle (1) supports markings pointing in the direction for opening, preferably by raised arrows, the bottle being provided with a structured surface as a gripping piece.

17. A bottle and metering device according to claim 1, characterised by projecting beading limiting the rotation of the outer part (3) relative to the inner part (2).

## Revendications

1. Bouteille (1) en matière élastique comprenant un dispositif doseur qui comporte un récipient de dosage calibré (7), un canal d'amenée du liquide à doser de l'intérieur de la bouteille (1) à une soupape placée dans le dispositif de dosage, pourvue d'un siège de soupape (16) et d'un corps de soupape (17), ainsi qu'un couvercle fermant le récipient de dosage (7) à l'extrémité opposée à la bouteille (1) et pourvu de deux orifices (9, 10) diamétralement opposés, destiné à débiter des quantités prédéterminées du liquide contenu dans la bouteille (1) où la bouteille (1) qui constitue un réservoir de stockage et reliée au récipient de dosage (7) et où il est prévu une pièce intérieure (2) qui empêche un reflux du liquide dosé du récipient de dosage (7) dans le réservoir, la pièce intérieure (2) du dispositif de dosage pouvant être disposée sur l'embouchure de la bouteille (1) compressible, renfermant le liquide à débiter, caractérisée en ce que la pièce intérieure (2) peut être posée sur l'embouchure au moyen d'un dispositif à encliquetage (4), en ce que des cames sont prévues extérieurement sur le col de la bouteille, tandis que la pièce intérieure (2) disposée sur la bouteille (1) comporte des nervures (5) faisant saillie vers l'intérieur, qui sont dimensionnées de telle façon par rapport à ces cames, que la pièce intérieure (2) est empêchée de tourner par rapport à la bouteille (1), en ce que le siège de soupape (16) ou le corps de soupape (17) peut être déplacé par rotation d'une prise (21) à volonté en direction axiale pour être rapproché ou éloigné de l'autre afin d'ouvrir ou fermer la soupape (16, 17), en ce qu'un couvercle (8), comportant deux ouvertures (9, 10) diamétralement opposées, dont une ouverture (10) est (en mesurant dans la direction longitudinale de la bouteille (1)) plus éloignée de celle-ci que l'autre ouverture (9), ferme le récipient de dosage (7) à l'extrémité opposée à la bouteille (1), et en ce que l'embouchure du tube de dosage (11) servant à amener le liquide de la soupape (16, 17) dans le récipient de dosage (7) est (la bouteille étant maintenue verticalement) située plus haut que le repère de la plus forte quantité de liquide devant couramment être débitée.

2. Bouteille comportant un dispositif doseur selon la revendication 1, caractérisée en ce que l'un des deux composants délimitant l'ouverture de soupape, c'est-à-dire le siège de soupape (16) ou le corps de soupape (17), de préférence le premier, est relié matériellement à la prise (21).

3. Bouteille comportant un dispositif doseur selon la revendication 1, caractérisée en ce que la pièce intérieure (2) pouvant être posée sur l'embouchure de la bouteille par un accouplement à encliquetage a la forme d'un capuchon et comporte extérieurement un filetage (6) sur lequel est placée la pièce extérieure (3) contenant le récipient de dosage (7), comportant un taraudage correspondant, qui est reliée matériellement à l'un des deux composants délimitant l'ouverture de soupape, c'est-à-dire le siège de soupape (16) ou le corps de soupape (17), de préférence le premier.

4. Bouteille comportant un dispositif doseur selon la revendication 1, caractérisée en ce que l'extrémité du récipient de dosage (7) opposée à la bouteille (1) est fermée par un couvercle (8), conforme de façon appropriée, en couvercle rabattant formé sur la pièce extérieure (3), qui comporte deux orifices (9, 10) diamétralement opposés.

5. Bouteille comportant un dispositif doseur selon la revendication 4, caractérisée en ce que la surface extérieure du couvercle (8) est dirigée obliquement par rapport à l'axe longitudinal du récipient de dosage (8) et en ce que les deux orifices (9, 10) qui s'y trouvent sont disposés de façon que l'orifice le plus grand (10), prévu pour le déversement du liquide, se trouve dans la zone du couvercle (8) la plus éloignée de la bouteille (1), tandis que l'autre orifice (9) le plus petit, prévu pour aspirer l'air, se trouve dans la zone la plus proche de la bouteille (1).

6. Bouteille comportant un dispositif doseur selon la revendication 1, caractérisée en ce que le récipient de dosage (7) comporte une paroi extérieure transparente pourvue d'un repère lisible de l'extérieur connu en soi pour les quantités dosées devant couramment être débitées.

7. Bouteille comportant un dispositif doseur selon la revendication 1, caractérisée en ce que l'orifice de sortie du tube de dosage (11) disposé, de préférence, centralement dans le récipient de dosage (7) est disposé latéralement et décalé de 90° à l'opposé de l'orifice (10) prévu pour le déversement du liquide.

8. Bouteille comportant un dispositif doseur selon la revendication 7, caractérisée en ce que le tube de dosage (11) comporte deux orifices de sortie (12) diamétralement opposés, qui sont décalés de 90° par rapport à l'orifice (10) prévu pour le déversement du liquide.

9. Bouteille comportant un dispositif doseur selon la revendication 1, caractérisée en ce que le tube de dosage (11) est relié matériellement à la paroi extérieure du récipient de dosage (7).

10. Bouteille comportant un dispositif doseur selon la revendication 1, caractérisée en ce que le couvercle (8) comporte sur sa face intérieure au moins une nervure de rebondissement (13) et, de préférence, deux nervures de rebondissement (13) faisant saillie vers l'intérieur, disposées de façon à limiter la pellicule de liquide se formant par l'impact des jets de liquide sur la face intérieure du couvercle (8) en direction de l'orifice (10) prévu pour le déversement.

11. Bouteille comportant un dispositif doseur selon la revendication 5, caractérisée en ce que le couvercle (8) comporte, sur sa face extérieure, un renflement annulaire (8′) faisant saillie vers l'extérieur en direction axiale, qui entoure les deux orifices (9, 10) situés dans le couvercle.

12. Bouteille comportant un dispositif doseur selon la revendication 11, caractérisée en ce que le petit orifice (9) se trouve dans la zone la plus profonde de la rainure (8″) formée par le renflement annulaire (8′) et délimitée extérieurement par lui.

13. Bouteille comportant un dispositif doseur selon la revendication 1, caractérisée en ce que le tube de dosage (11) relié matériellement à la prise (21), de préférence d'un seul tenant, et présentant, de préférence, une conformation conique, comporte, à son extrémité située du côté de la soupape, un renflement d'étanchéité (16) faisant saillie vers l'intérieur, qui est en contact étanche, lorsque la soupape est fermée, avec un manchon d'étanchéité (17) relié rigidement à la pièce intérieure (2) et se déplace hélicoïdalement par rapport au manchon d'étanchéité, lors de l'ouverture de la soupape.

14. Bouteille comportant un dispositif doseur selon la revendication 13, caractérisée en ce qu'il est prévu, sur la face du renflement annulaire (16) située du côté de la bouteille (1), une lèvre d'étanchéité (15) conformée, de préférence, en calotte, qui est en contact avec une tubulure (18) reliée rigidement à la pièce intérieure (2), disposée concentriquement par rapport au manchon d'étanchéité, et dont la longueur est calculée de façon qu'elle soit en contact avec cette tubulure (18), lorsque la soupape est entièrement ouverte.

15. Bouteille comportant un dispositif doseur selon la revendication 1, caractérisée en ce que la zone de la pièce intérieure (2) orientée vers la bouteille (1), cachée par la prise (21) de la pièce extérieure (3) dans la position de fermeture de la soupape mais visible dans la position d'ouverture de la soupape est coloriée.

16. Bouteille comportant un dispositif doseur selon la revendication 1, caractérisée en ce que la zone de la pièce extérieure (3) située du côté de la bouteille (1), comportant, en tant que prise (21), une surface structurée, comporte un repère constitué par des flèches (22), de préférence en relief, orienté dans le sens d'ouverture.

17. Bouteille comportant un dispositif doseur selon la revendication 1, caractérisée par des renflements en saillie qui limitent la rotation de la pièce extérieure (3) par rapport à la pièce intérieure (2).

Fig. 1

0 087 016

FIG. 2

# Fig. 3

# Fig. 4

# Fig. 5

**Fig. 7**

20ml

15

10

5

8

19

21

22

**Fig. 6**

9

10

17

Fig. 9

2

5

5

Fig. 8

18

4'

2

5

4'

Fig. 10

2